# EUROPÄISCHE PATENTANMELDUNG

(11) **EP 1 566 100 A1**
(43) Veröffentlichungstag der Anmeldung: **24.08.2005**
(21) Anmeldenummer: 04008684.5
(22) Anmeldetag: 13.04.2004
(51) Int. Cl.: A01N 59/00, C01B 11/02

(54) **Bleich-, Desinfektions-, Desodorierungs- und/oder Oxidationsmittel auf Chlordioxidbasis**

(30) Priorität: 20.02.2004 DE 20402826 U
(71) Anmelder: Schmid, Erich, Dr., 67435 Neustadt-Gimmeldingen (DE)
(72) Erfinder: Schmid, Erich, Dr., 67435 Neustadt-Gimmeldingen (DE)
(74) Vertreter: Ratzel, Gerhard

(57) **Zusammenfassung**

Die vorliegende Erfindung betrifft ein Bleich- und/oder Desinfektionsund/oder Desodorierungs- und/oder Oxidationsmittel auf Chlorbasis, das dadurch gekennzeichnet ist, dass die Lösung Chlordioxid und einen Chlordioxid-Binder enthält. Bevorzugtermaßen ist die Lösung eine wässrige Lösung. Nach bevorzugten Ausführungsformen ist der Binder ein Komplexbinder, ein Assoziationsbinder (Anlagerungsbinder), ein partieller Binder, ein reversibler Binder.

Als Binder eignen sich insbesondere stickstoffhaltige Verbindungen, phosphorhaltige Verbindungen und schwefelhaltige Verbindungen.

Bei weiteren bevorzugten Ausführungsformen besteht der Binder aus einem Tensid und/oder einem Ampholyt.

## Beschreibung

Vorliegende Erfindung bezieht sich auf ein Bleich- und/oder Desinfektions- und/oder Desodorierungs- und/oder Oxidationsmittel auf Chlorbasis, das dadurch gekennzeichnet ist, dass es eine Kombination einer Chlordioxid-Lösung (ClO₂) und eines Chlordioxid-Binders enthält.

Das Wesen dieses Binders wird weiter unten erläutert.

Bekanntlich ist Chlordioxid (ClO₂) bei normalen Bedingungen (20° C) und 760 mm Hg ein rot-gelbes Gas. Es ist in Wasser und anderen Lösungsmitteln begrenzt löslich.

Über die Darstellung des Chlordioxids besteht eine umfangreiche Literatur, beispielsweise wird Chlordioxid durch elektrolytische Reduktion von Natriumchlorat (NaClO₃) gewonnen.

Die Darstellung einer Chlordioxid-Lösung für die Wasserreinigung ist beispielsweise in der publizierten Patentanmeldung (sogenannte DAS) 1082580 beschrieben.

Speziell für Schwimmbäder kann Chlordioxid auch produziert werden, durch Mischen von Natriumchlorit und Amidosulfonsäure.

Reaktionsgleichung: 5 NaClO₂ + 4 HSO₃NH₂ → 4 ClO₂ + 4 NaSO₃NH₂ + NaCL + 2 H₂O. Diese Reaktion ist in der Literaturstelle "Wallhäußer Praxis der Sterilisation, 4. Auflage, Seite 504" beschrieben. Gemäß dieser Literaturstelle ergibt sich eine schwach gelb gefärbte Lösung.

Eine der meist verwendeten Herstellungsweisen besteht in der Umsetzung von Chlorwasserstoffsäure (Salzsäure) mit Natriumchlorit. Ausbeuten bis 100 % an Chlordioxid kann man durch die Optimierung der Chlorwasserstoffsäurekonzentration und der Natriumchloritkonzentration erreichen.

Eine weitere Herstellungsweise geht von der chlorigen Säure aus.

Ferner kann man die Chlordioxidherstellung durch die Zersetzung von Natriumchlorit in einem Essigsäurepuffer steuern. Im Titel und im ersten Absatz dieser Beschreibung wurde die praktische Verwendung von Chlordioxid genannt, die weltweit eine sehr große Bedeutung hat.

Jedoch stößt die praktische Verwendung von Chlordioxid aus mindestens 2 Gründen immer noch auf grundlegende Probleme.

Wässrige Lösungen von Chlordioxid riechen bei Konzentrationen über 0,5 ppm stark und stechend wegen des Ausgasens von Chlordioxid. Der MAK-Wert von Chlordioxid wird wegen des Ausgasens schnell überschritten.

Während eine Lösung von 0,2 ppm, wie man sie z.B. zur Wasserdesinfektion benutzt, noch weitgehend geruchlos und geschmacksneutral ist, sind wässrige Lösungen von Chlordioxid bis 10 ppm stark gelb-grün gefärbt und riechen schon extrem stechend, so dass eine Verwendung als Desinfektionslösung praktisch unmöglich ist.

Neben diesem Problem besteht ein zweites Problem darin, dass durch das Ausgasen von Chlordioxid sich oberhalb des Flüssigkeitsspiegels von Lösungen auf Basis Chlordioxid hohe Chloridgehalte, verbunden mit sehr starker korrosiver Wirkung, auch bei Geräten aus Edelstahl, ergeben. Der Edelstahl fängt dadurch an zu rosten und es ergibt sich die bekannte Lochkorrosion.

Vorliegender Erfindung liegt nun die überraschende Erkenntnis zu Grunde, dass man diese geschilderten Nachteile über Erreichung von sprunghaften Vorteilen dadurch erfindungsgemäß verhindern kann, indem man den Chlordioxid-Lösungen, insbesondere den wässrigen Chlordioxid-Lösungen, Substanzen beigibt, die eine Binder-Eigenschaft hinsichtlich des Chlordioxids aufweisen, wobei es sich bei diesen Bindungen um Komplexbinder oder Assoziations-Binder oder sonstige Binder handelt, die insbesondere partiell und/oder reversibel einen Teil oder das gesamte Chlordioxid temporär binden.

Die Lösungen, insbesondere die wässrige Lösung dieser Kombi-nation aus Chlordioxid und Binder sind überraschend farblos und geruchlos, obwohl sie Chlordioxid enthalten und die gewünschten Wirkungen des Chlordioxids in ihrer Anwendung entfalten.

Ein Beispiel für den Binder ist beispielsweise Diethylentriaminpentaessigsäure.

Wenn man eine gelb-grüne wässrige Lösung von Chlordioxid mit Diethylentriaminpentaessigsäure kombiniert, entfärbt sich die Lösung und wird geruchlos.

Nach Auffinden dieses überraschenden Chemismus ist es für den Fachmann relativ einfach festzustellen, ob eine Chemikalie Bindereigenschaften im erfindungsgemäßen Sinn hat oder nicht.

Zusammenfassend kann festgestellt werden, dass die erfindungsgemäße Kombination von Chlordioxid und dem Binder in Lösung das Verschwinden der Färbung und des Geruchs bzw. das Ausgasen des Chlordioxids verschwindet, die oxidativen Eigenschaften aber erhalten bleiben und so eine unproblematische Verwendung als Oxidationsmittel, Bleichmittel und Desinfektionsmittel zulassen.

Bevorzugte Ausführungsformen des Binders sind stichstoffhaltige Chemikalien, insbesondere stickstoffhaltige Tenside, ferner stickstoffhaltige Phosphorverbindungen und Ampholyte.

Insbesondere Alkyl-amino-essigsäure und ferner auch stickstoffhaltige Phosphonate und/oder Phosphonsäuren eignen sich erfindungsgemäß besonders gut als Binder im erfindungsgemäßen Sinn.

Das Wesen vorliegender Erfindung wird nun an Hand von zwei Ausführungsbeispielen und Vergleichsbespielen weiterhin erläutert.

### Beispiel 1:

Zu 100 ml einer wässrigen Lösung von 5 ppm Chlordioxid, die deutlich gelb-grün gefärbt ist, gibt man 1 Gramm folgender Substanzen:
1. Phosphono-butan-tricarbonsäure
2. Nitrilo-tri-methylenphosphonsäure
3. Ethylendiamintetraacetat (EDTA)
4. Diethylen-triamin-pentamethylenphosphonsäure
5. Hydroxy-ethan-diphosphonsäure.

In den Fällen der Substanzen 2; 3 und 4 entfärbt sich die Lösung spontan.

Versucht man nun in der wässrigen Lösung Chlordioxid mittels Diphenylendiamin als roten Farbstoff nachzuweisen, dann findet man im Falle der Substanzen 2 und 4 sowohl sofort als auch nach mehreren Stunden Chlordioxid in beträchtlichem Ausmaß, die Lösungen sind aber im Gegensatz zu den Lösungen 1; 3 und 5 völlig geruchsfrei.

Die Lösungen 1 und 5 sind stabil gegen Chlordioxid und riechen entsprechend stark und stechend.

Die Lösung von EDTA ist nicht stabil gegen Chordioxid, reagiert mit diesem und es ist daher kein Chlordioxid mehr nachweisbar.

### Beispiel 2:

Zu 100 ml. einer wässrigen Lösung von 5 ppm Chlordioxid, die deutlich gelb-grün gefärbt ist, gibt man 1 Gramm folgender Tenside:
1 Di-alkyl-dimethylammoniumchlorid
2 Alkylamino-essigsäure
3 Alkylaminodipropionat
4 C12-Fettalkohol ethoxilat 10 EO
5 Fettalkylaminoxid
6 Alkylethercarbonat

In den Fällen 2 und 3 entfärbt sich die Lösung spontan.

Versucht man nun, in der wässrigen Lösung Chlordioxid mittels Diphenylendiamin als roten Farbstoff nachzuweisen, dann findet man im Falle 2 und 3 sowohl sofort als auch nach mehreren Stunden Chlordioxid in beträchtlichem Ausmaß, die Lösungen sind aber im Gegensatz zu den Lösungen 1 und 6 völlig geruchsfrei.

Da die Lösungen 1 und 6 stabil gegen Chlordioxid sind, riechen sie entsprechend stark und stechend.

Im folgenden wird noch der mikrobiologische Nachweis der Oxidationswirkung der wasserklaren nicht riechenden Lösung beschrieben:

Die Lösung wird einem Suspensionstest nach DLG mit dem Bakterium escherichia coli unterzogen.

Nach 2,5 min. Einwirkzeit waren keine Testkeime mehr nachweisbar.

Die Bleichwirkung ist gut, die Lösung kann auch vorteilhaft für die Entfernung von Teerückständen in Teetassen Verwendung finden.

Die Komponenten des erfindungsgemäßen Mittels können bis kurz vor ihrem Einsatz getrennt gelagert sein.

Diese Komponenten können bevorzugtermaßen in einem Gefäß mit Trennwand, die entfernbar und/oder durchstoßbar ist, gelagert sein.

### Weitere Ausführungsbeispiele:

In eine wässrige Lösung von 5 ppm Chlordioxid werden jeweils 0,5 % Tensid (bezogen auf Wasser) zugegeben. Die anschließende Tabelle zeigt, dass es Tenside gibt, die Binder-Eigenschaften haben und dass es Tenside gibt, die stabil gegen Chlordioxid sind und damit geruchlich unangenehm bzw. nicht einsetzbar sind und dass es schließlich auch Tenside gibt, die spontan abgebaut werden.

| Rohstoff | Farbe der Lösung | Chlordioxid-Gehalt | Geruch |
|---|---|---|---|
| Alkylamin-Carboxylat | farblos | 5 ppm | keiner |
| Fettsäurealkylamidopropylamin | gelb | 5 ppm | stark |
| N-Kokosalkylaminopropansäure, Triethanolammoniumsalz | farblos | 0,2 ppm | keiner |
| C-8 Amphocarboxylat | farblos | 0 | keiner |
| Alkylaminodipropionat | farblos | 5 ppm | keiner |

## Patentansprüche

1. Bleich- und/oder Desinfektions- und/oder Desodorierungs- und/oder Oxidationsmittel auf Chlorbasis
**dadurch gekennzeichnet,**
**dass** die Lösung Chlordioxid und einen Chlordioxid-Binder enthält.

2. Mittel nach Anspruch 1,
**dadurch gekennzeichnet,**
**dass** die Lösung eine wässrige Lösung ist.

3. Mittel nach Anspruch 1 oder 2,
**dadurch gekennzeichnet,**
**dass** der Binder ein Komplexbinder und/oder ein Assoziations-binder (Anlagerungsbinder) ist.

4. Mittel nach einem der Ansprüche 1 - 3,
**dadurch gekennzeichnet,**
**dass** der Binder ein partieller Binder ist.

5. Mittel nach Anspruch 1 - 4,
**dadurch gekennzeichnet,**
**dass** der Binder ein reversibler Binder ist.

6. Mittel nach mindestens einem der Ansprüche 1 - 5,
**dadurch gekennzeichnet,**
**dass** der Binder aus einer stickstoffhaltigen Verbindung und/oder einer phosphorhaltigen Verbindung und/oder einer schwefelhaltigen Verbindung besteht.

7. Mittel nach mindestens einem der Ansprüche 1 - 6,
**dadurch gekennzeichnet,**
**dass** der Binder aus einem Tensid besteht.

8. Mittel nach Anspruch 1 - 6,
**dadurch gekennzeichnet,**
**dass** der Binder aus einem Ampholyt besteht.

9. Mittel nach mindestens einem der Ansprüche 1 - 8.
**dadurch gekennzeichnet,**
**dass** die beiden Komponenten Chlordioxid einerseits und Chlordioxid-Binder andererseits bis kurz vor dem Einsatz getrennt gelagert sind.

10. Mittel nach mindestens einem der Ansprüche 1 - 9,
**dadurch gekennzeichnet,**
**dass** die beiden Komponenten Chlordioxid einerseits und Chlordioxid-Binder andererseits in einem Gefäß mit Trennwand, die entfernbar und/oder durchstoßbar ist, gelagert sind.
